# EUROPÄISCHE PATENTSCHRIFT

(11) **EP 2 987 911 B1**
(45) Veröffentlichungstag und Bekanntmachung des Hinweises auf die Patenterteilung: **12.04.2017**
(21) Anmeldenummer: 15180916.7
(22) Anmeldetag: 13.08.2015
(51) Int. Cl.: E01C 23/088, B65G 41/00

(54) **SELBSTFAHRENDE FRÄSMASCHINE, SOWIE VERFAHREN ZUM ABLADEN VON FRÄSGUT**
SELF-PROPELLED MILLING MACHINE, AND METHOD FOR UNLOADING MILLED GOODS
FRAISEUSE AUTOMOBILE, ET PROCEDE D'EVACUATION DE PRODUIT DE FRAISAGE

(30) Priorität: 22.08.2014 DE 102014216713
(43) Veröffentlichungstag der Anmeldung: 24.02.2016
(73) Patentinhaber: Wirtgen GmbH, 53578 Windhagen (DE)
(72) Erfinder: Berning, Christian, 53909 Zülpich (DE); Winkels, Sebastian, 51570 Windeck (DE); Kröll, Harald, 53572 Unkel (DE); Krista, Tobias, 53123 Bonn (DE); Barimani, Cyrus, 53639 Königswinter (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 2 700 748
- DE-A1-102012 215 013

## Beschreibung

Die Erfindung betrifft eine selbstfahrende Fräsmaschine nach dem Oberbegriff des Anspruchs 1, ein Verfahren zum Abladen von Fräsgut nach dem Oberbegriff des Anspruchs 12, sowie eine Straßen- oder Bodenbearbeitungseinheit nach Anspruch 16.

Bei einer selbstfahrenden Fräsmaschine ist es bekannt, das Fräsgut auf mindestens ein Transportfahrzeug mit einer Ladefläche abzuladen.

Die Fräsmaschine weist eine Steuerung für den Fahr- und Fräsbetrieb auf sowie eine Arbeitswalze zum Fräsen z. B. eines Straßenbelages. Vor oder hinter der Arbeitswalze - in Fahrtrichtung gesehen - befindet sich eine Transportbandeinrichtung, z. B. eine Transportbandeinrichtung mit mindestens einem Transportband. Die Transportbandeinrichtung weist ein Abwurfende auf, an dem das Fräsgut aufgrund der Fördergeschwindigkeit über eine Flugbahn in Form einer Wurfparabel auf die Ladefläche des mindestens einen Transportfahrzeugs abgeladen wird. Das in Transportrichtung letzte oder einzige Transportband der Transportbandeinrichtung kann relativ zur Längsachse der Fräsmaschine seitlich unter einem vorgebbaren Schwenkwinkel nach links oder rechts verschwenkt werden und über einen vorgebbaren Höhenwinkel höhenverstellbar sein. Auch kann die Fördergeschwindigkeit des Transportbands einstellbar sein.

Im praktischen Betrieb entstehen Probleme bei der Koordination der Fräsmaschine mit dem Transportfahrzeug.

Beispielsweise wird bei einer Vorderlader-Fräsmaschine das Fräsgut nach vorne auf das vorausfahrende Transportfahrzeug abgeworfen. Die Bedienungsperson für die Fräsmaschine muss dem Fahrzeugführer des Transportfahrzeuges signalisieren, wann sich das Transportfahrzeug weiter nach vorne bewegen soll und wann es anhalten soll. Dies führt zu Problemen, weil sich die Bedienungsperson im Grunde genommen auf den Fräsbetrieb konzentrieren muss und gleichzeitig eine Kollision mit dem vorausfahrenden Transportfahrzeug vermeiden muss.

Ein weiteres Problem besteht darin, dass die Bedienungsperson für die Fräsmaschine .auch die optimale Beladung der Ladefläche durch Verstellung des Schwenkwinkels, des Höhenwinkels und der Fördergeschwindigkeit des in Transportrichtung letzten oder einzigen Transportbandes der Transportbandeinrichtung übernehmen muss und dadurch von seiner eigentlichen Aufgabe, den Fräsbetrieb durchzuführen, abgelenkt wird. Eine Korrektur des Schwenkwinkels kann beispielsweise bei einem Wechsel der Lenkrichtung der Fräsmaschine oder für eine gleichmäßige Beladung der Ladefläche notwendig sein.

Auch im Falle einer Hinterlader-Fräsmaschine bestehen Probleme bei der Koordination der Fräsmaschine mit dem Transportfahrzeug, zumal das Transportfahrzeug in Rückwärtsfahrt hinter der Fräsmaschine hinterherfahren muss. Für die Bedienungsperson der Fräsmaschine ergibt sich eine noch höhere Belastung, da sie einerseits den Fräsbetrieb in Vorwärtsfahrt steuern muss und andererseits die Beladung des Transportfahrzeugs in Fahrtrichtung hinter der Fräsmaschine beobachten muss, den Schwenkwinkel, den Höhenwinkel und/oder die Fördergeschwindigkeit der Transportbandeinrichtung steuern muss und dem Fahrzeugführer die notwendigen Informationen für den Stop-and Go-Betrieb vermitteln muss.

Der Schwenkwinkelbereich ist konstruktionsbedingt bei Kleinfräsen auf ca. ± 30° und bei Großfräsen auf ca. ± 60° mechanisch beschränkt.

Aus der DE 10 2012 215 013 A ist es bekannt, den Abladevorgang zu automatisieren, wobei insbesondere auch der Schwenkwinkel des in Transportrichtung letzten oder einzigen Transportbandes der Transportbandeinrichtung der selbstfahrenden Fräsmaschine automatisch steuerbar ist.

Aus der EP 2 700 748 A ist es bekannt, den Schwenkwinkel eines Transportbandes in Abhängigkeit von zumindest einem der folgenden erfassten Parameter: Lenkeinschlag der Lenksteuerung für das Fahrwerk, Lenkeinschlag der Lenkungssteuerung und die zurückgelegte Fahrstrecke oder die Fahrgeschwindigkeit über ein Steuerungssystem automatisiert zu steuern.

Bei der Steuerung des Schwenkwinkels besteht das Problem, dass aufgrund der vielen Einflussgrößen, wie beispielsweise Kurvenfahrt, unterschiedliche Transportfahrzeuge, Abstand zu dem Transportfahrzeug, intermittierender Betrieb des Transportfahrzeugs, die Bedienungsperson für die Fräsmaschine schnell überfordert ist, so dass das Fräsgut in ungünstigen Fällen auch neben der Ladefläche des Transportfahrzeugs landen kann. Damit geht nicht nur der Verlust des Fräsguts einher sondern unter Umständen auch eine aufwändige Nacharbeit, wenn nämlich das verlorene Fräsgut auf einer neben der Frässpur verlaufenden Fahrbahn zu liegen kommt, von der es wieder entfernt werden muss.

Auch im Fall eines automatischen Abladevorgangs können unkontrollierte Fehlsteuerungen auftreten.

Der Erfindung liegt daher die Aufgabe zugrunde, eine selbstfahrende Fräsmaschine, sowie ein Verfahren zum Abladen von Fräsgut einer Fräsmaschine anzugeben, die hinsichtlich der Steuerung des Transportbandes Fehlsteuerungen und Fräsgutverluste vermeiden.

Zur Lösung dieser Aufgabe dienen die Merkmale der Ansprüche 1, 12 bzw. 16. Die Erfindung sieht in vorteilhafter Weise vor, dass die Steuerung Grenzwerte für einen maximal zulässigen Schwenkwinkelbereich für das Verschwenken des Transportbandes vorgibt und überwacht.

Auf diese Weise ist sichergestellt, dass die automatische Schwenkwinkelsteuerung das Transportband in keiner Betriebssituation in eine Position verschwenken kann, bei der das Transportband seitlich zu weit ausschwenkt, so dass die Auftreffstelle des Fräsgutes die Ladefläche verfehlt. Es versteht sich, dass der vorgegebene maximal zulässige Schwenkwinkelbereich den konstruktiv bedingten maximalen Schwenkbereich begrenzt.

Vorzugsweise kann die Steuerung die Grenzwerte für den zulässigen Schwenkwinkelbereich relativ zu dem Maschinenrahmen und/oder relativ zu dem Transportband vorgeben. Die Grenzwerte für den zulässigen Schwenkwinkelbereich relativ zu dem Transportband können zeit- oder wegstreckenabhängig vorgegeben sein.

Insbesondere bei Kurvenfahrt besteht die Möglichkeit, die Grenzwerte in Abhängigkeit vom aktuellen Kurvenradius dynamisch vorzugeben. Dies bedeutet, dass der Umfang des Schwenkwinkelbereichs auch unverändert bleiben kann, aber dessen Ausrichtung relativ zu dem Maschinenrahmen und/oder relativ zu dem Transportband in Abhängigkeit vom aktuellen Kurvenradius anpassbar ist. Es versteht sich, dass der Umfang des Schwenkwinkelbereichs bei Geradeausfahrt oder bei Kurvenfahrt unterschiedlich sein kann, so dass auch der Umfang des Schwenkbereichs dynamisch veränderbar ist.

Insbesondere werden die Grenzwerte in Abhängigkeit von der aktuellen Betriebssituation variiert.

Vorzugsweise ist vorgesehen, dass der Maschinenrahmen und das Transportband jeweils eine Längsmittelachse aufweisen, wobei der zulässige Schwenkwinkelbereich bezogen auf die Längsmittelachse des Maschinenrahmens unsymmetrisch begrenzbar ist. Mit Hilfe der unsymmetrischen Begrenzung besteht die Möglichkeit, zu berücksichtigen, ob sich an einer der Seiten der Ladefläche z. B. eine Fahrbahn befindet, die nicht verschmutzt werden darf, während sich auf der anderen Seite z. B. eine Bankette befindet bei der eine Verschmutzung unerheblich ist. In Bezug auf den Maschinenrahmen kann der Schwenkwinkelbereich absolut festgelegt sein.

Der zulässige Schwenkwinkelbereich bezogen auf die aktuelle Längsmittelachse des Transportbandes kann symmetrisch oder unsymmetrisch auf einen engeren Winkelbereich im Vergleich zu dem maximal zulässigen Schwenkbereich begrenzbar sein. Außerdem können die Grenzwerte des Schwenkwinkelbereichs zeit- oder wegstreckenabhängig begrenzbar sein.

Es existiert demzufolge ein maximaler Schwenkbereich relativ zum Maschinenrahmen und innerhalb dieses maximal zulässigen Schwenkwinkelbereichs ein zulässiger Schwenkwinkelbereich um die Längsmittelachse des Transportbandes.

Dabei kann vorgesehen sein, dass die Steuerung eine Erfassungs- und Steuereinheit aufweist, die die Positionierung des Fräsgutes auf der Ladefläche zumindest über den Schwenkwinkel und/oder über den Höhenwinkel und/oder die Fördergeschwindigkeit des Transportbandes automatisch steuert.

Die Erfassungs- und Steuereinheit legt Grenzwerte für den aktuellen zulässigen Schwenkwinkelbereich in Abhängigkeit der relativen Lage der Längsmittelachsen zueinander und/oder des eingestellten Höhenwinkels und/oder der Fördergeschwindigkeit und/oder eines aktuellen Lenkwinkels der Fräsmaschine und/oder des Abstandes zwischen der Fräsmaschine und dem Transportfahrzeug vorzugsweise automatisch fest.

Die Steuerung kann ein Informationssignal über den neben dem Transportfahrzeug befindlichen Arbeitsraum erhalten und den maximal zulässigen Schwenkwinkelbereich in Richtung auf wenigstens eine Seite des Transportfahrzeuges verringern oder vollständig sperren, wenn auf dieser wenigstens einen Seite z. B. eine Fahrbahn angrenzt, die nicht verschmutzt werden darf. Dieses Informationssignal wird vorzugsweise von dem Fahrzeugführer manuell in die Steuerung oder in die Erfassungs- und Steuereinheit eingegeben.

Bei einem bevorzugten Ausführungsbeispiel ist vorgesehen, dass auf einen manuellen Steuerbefehl hin der zulässige Schwenkwinkelbereich überschreitbar ist. Es versteht sich, dass der manuelle Steuerbefehl rücksetzbar ist und/oder die zugelassene Überschreitung zeitabhängig oder wegstreckenabhängig beschränkbar ist.

Es kann demnach vorgesehen sein, dass der Steuerbefehl vorzugsweise nach einem vorgegebenen Zeitablauf oder nach einer zurückgelegten Mindestwegstrecke wiederholt ausführbar ist.

Beispielsweise kann der zusätzlich erlaubte Schwenkwinkel auf die aktuelle Lage der Längsmittelachse des Transportbandes bezogen sein und jeweils nur ein fester Winkelbetrag jeweils bezogen auf die aktuelle Ausgangsposition zusätzlich zugelassen werden.

Insbesondere kann auch nach einer Veränderung der Lage der Längsmittelachse des Transportbandes diese Lage als neue Ausgangslage für die Beschränkung des Schwenkwinkelbereichs akzeptiert werden.

Außerdem kann vorgesehen sein, dass die zulässige Überschreitung auf einen manuellen Steuerbefehl hin betragsmäßig begrenzt ist. Beispielsweise kann die Überschreitung auf einen kleinen Winkelbetrag oder auf eine niedrigere Verschwenkgeschwindigkeit beschränkt sein.

Die Steuerung bzw. die Erfassungs- und Steuereinheit kann die veränderliche Lage der Ladefläche des Transportfahrzeugs relativ zum Maschinenrahmen oder die veränderliche Lage der Ladefläche des Transportfahrzeugs relativ zum Transportband detektieren und Grenzwerte für den aktuellen maximalen Schwenkwinkelbereich in Abhängigkeit der Lage der detektierten Ladefläche, und/oder des eingestellten Höhenwinkels und/oder der Fördergeschwindigkeit und/oder eines aktuellen Lenkwinkels der Fräsmaschine und/oder des Abstandes zwischen Fräsmaschine und dem Transportfahrzeug automatisch festlegen.

Die Steuerung oder die Erfassungs- und Steuereinheit kann den maximal zulässigen Schwenkwinkelbereich auch in Abhängigkeit von dem intermittierenden Betrieb des Transportfahrzeuges und/oder dem Abstand zwischen Fräsmaschine und Transportfahrzeug variieren.

Insbesondere kann vorgesehen sein, dass bei Stillstand des Transportfahrzeugs ein erster Schwenkwinkelbereich und während der Bewegung des Transportfahrzeuges ein zweiter Schwenkwinkelbereich festlegbar ist.

Die Erfassungs- und Steuereinheit kann alternativ auch die Ladefläche detektieren und den maximal zulässigen Schwenkwinkelbereich in Abhängigkeit von einer vorgegebenen Zone auf der Ladefläche festlegen und/oder den Beladungszustand auf der Ladefläche detektieren und den maximal zulässigen Schwenkwinkelbereich in Abhängigkeit von dem detektierten Beladungszustand variieren.

Eine derartige Steuerung ermöglicht es, dass sich der Fahrzeugführer der Fräsmaschine auf den Fräsbetrieb und die Fahrt entlang einer vorgegebenen Frässpur konzentrieren kann. Auf diese Weise kann ein automatischer Abladevorgang realisiert werden, der auch bei Kurvenfahrt für eine automatische Koordination des Abladevorgangs mit der Bewegung der Fräsmaschine und des Transportfahrzeugs sorgt, ohne dass maximal zulässige Schwenkbereiche des Transportbandes überschritten werden.

In Abhängigkeit von Ladeflächen unterschiedlicher Transportfahrzeuge und/oder in Abhängigkeit unterschiedlicher Beladungszustände der Ladefläche für unterschiedliche Lagen und/oder Auftreffstellen innerhalb der von dem Erfassungs-und Steuereinheit erfassten Lage einer Ladefläche können Steuerungsdaten für den Schwenkwinkelbereich, den Höhenwinkel und/oder die Fördergeschwindigkeit in einem Kennfeld gespeichert sein, das der Erfassungs- und Steuereinheit zur Verfügung steht.

Zur Lösung der Aufgabe dienen auch die Merkmale des Anspruchs 12.

Nach dem erfindungsgemäßen Verfahren ist vorgesehen, dass der maximal zulässige Schwenkwinkelbereich für das Verschwenken des Transportbandes beschränkt wird.

Vorzugsweise wird der zulässige Schwenkbereich relativ zu dem Maschinenrahmen und/oder relativ zu der aktuellen Lage des Transportbandes vorgegeben. Der Schwenkwinkelbereich kann auch in Abhängigkeit von der aktuellen Betriebssituation dynamisch variiert werden.

Hierzu kann vorgesehen sein, dass bei Kurvenfahrt die relative Lage des Schwenkwinkelbereichs zu dem Maschinenrahmen und/oder dem Transportband in Abhängigkeit vom aktuellen Kurvenradius dynamisch angepasst wird.

Die Erfindung betrifft auch eine Straßen- oder Bodenbearbeitungseinheit bestehend aus einer selbstfahrenden Fräsmaschine und mindestens einem von der Fräsmaschine unabhängig verfahrbaren und relativ zu der Fräsmaschine derart positionierbaren Transportfahrzeug, das das von der Fräsmaschine abgearbeitete Fräsgut auf das Transportfahrzeug abgeladen wird, die durch eine Fräsmaschine mit den Merkmalen der Ansprüche 1 bis 11 gekennzeichnet ist.

Im Folgenden werden unter Bezugnahme auf die Zeichnungen Ausführungsbeispiele der Erfindung näher erläutert.

Es zeigen:
- Fig. 1: eine Vorderlader-Straßenfräsmaschine,
- Fig. 2: eine Hinterlader-Straßenfräsmaschine, und
- Fig. 3: eine Draufsicht auf eine Fräsmaschine gemäß Fig. 1.

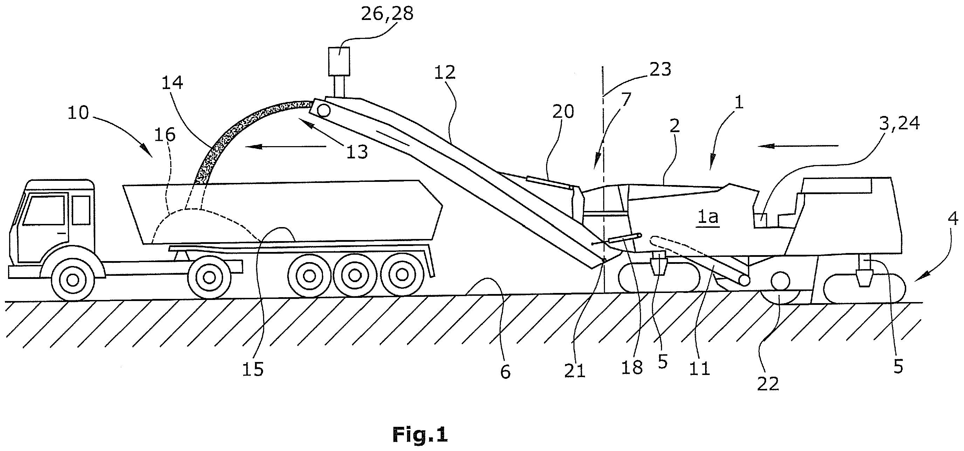

Fig. 1 zeigt eine Fräsmaschine 1 am Beispiel einer Vorderlader-Straßenfräsmaschine 1a. Die Fräsmaschine 1 weist einen Maschinenrahmen 2 auf, der von einem beispielsweise aus Kettenlaufwerken oder Rädern bestehenden Fahrwerk 4 getragen wird, das über mindestens drei Höhenverstelleinrichtungen in Form von Hubsäulen 5 mit dem Maschinenrahmen 2 verbunden ist. Wie aus Fig. 1 ersichtlich, sind bei dem Ausführungsbeispiel vier Hubsäulen 5 vorgesehen, mit denen der Maschinenrahmen 2 in eine vorgebbare Ebene gebracht werden kann, die vorzugsweise parallel zur Straßenoberfläche 6 verläuft, auf denen die Kettenlaufwerke oder Räder des Fahrwerks 4 stehen.

Die in Fig. 1 gezeigte Straßenfräsmaschine weist eine Arbeitswalze 22 in Längsrichtung der Fräsmaschine 1a zwischen den Kettenlaufwerken des Fahrwerks 4 auf.

Die Fräsmaschinen 1a, 1b können Kettenlaufräder und/oder Räder aufweisen. Die Arbeitswalze kann über die den Maschinenrahmen 2 tragenden Hubsäulen 5 oder relativ zu dem Maschinenrahmen 2 höhenverstellbar sein.

Andere Bauformen einer Fräsmaschine 1b können die Arbeitswalze 22 beispielsweise auch in Höhe der hinteren Kettenlaufwerke oder Räder des Fahrwerks 4 aufweisen.

Ebenso kann die Transportbandeinrichtung mit mindestens einem Transportband 11,12 zum Abtransport des abgefrästen Fräsgutes am vorderen 7 oder hinteren Ende 8 der Fräsmaschine 1a, 1b angeordnet sein.

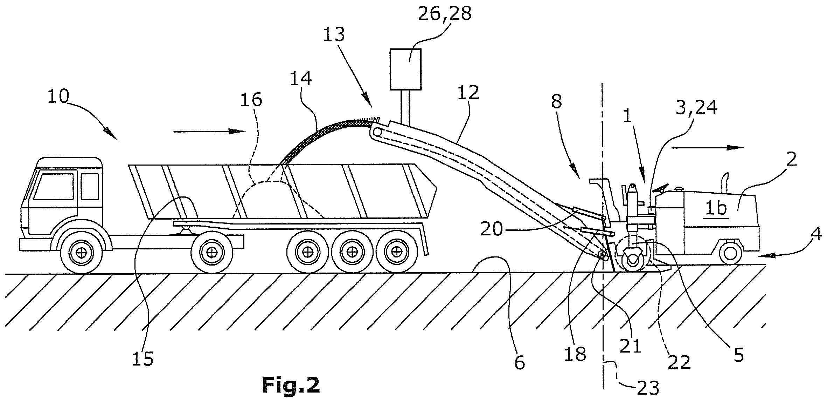

Fig.2 zeigt das Beispiel einer Hinterlader-Fräsmaschine 1b, bei der das Transportfahrzeug 10 in Rückwärtsfahrt hinter der Fräsmaschine hinterherfährt.

Sofern seitlich neben der Fräsmaschine 1a, 1b ausreichend Platz zur Verfügung steht, kann das Transportfahrzeug 10 auch in Vorwärtsfahrt neben der Fräsmaschine 1 bewegt werden.

Die Fahrtrichtungen der jeweiligen Fahrzeuge sind in den Fign. 1 bis 3 jeweils durch Pfeile angezeigt.

Bei dem Ausführungsbeispiel der Fig. 1 wird das von der Arbeitswalze 22 abgefräste Fräsgut über ein erstes ortsfestes Transportband 11 der Transportbandeinrichtung, das das Fräsgut 14 auf ein zweites schwenkbares Transportband 12 überträgt, auf die Ladefläche 15 des Transportfahrzeugs 10 abgeladen. Aufgrund der Geschwindigkeit des Transportbandes 12 wird das Fräsgut 14 nicht unmittelbar am Ende des Transportbandes 12 abgeladen, sondern das Fräsgut folgt einer Wurfparabel, so dass die Auftreffstelle 16 auf der Ladefläche 15 mit Abstand von dem freien Ende 13 des Transportbandes 12 befindlich ist. Das Transportband 12 kann aus einer Mittelposition heraus nach links oder nach rechts über Kolben-Zylindereinheiten 18 verschwenkt werden, um das Fräsgut 14 auch bei Kurvenfahrt bzw. bei spurversetztem Fahren des Transportfahrzeugs 10 auf die Ladefläche 15 abladen zu können. Des Weiteren kann der Fahrzeugführer der Fräsmaschine 1a, 1b den Höhenwinkel des Transportbandes 12 mit Hilfe einer KolbenZylindereinheit 20 einstellen. Der Höhenwinkel beeinflusst ebenso wie die Fördergeschwindigkeit des Transportbandes 12, die Wurfparabel des Fräsgutes 14 und die Position der Auftreffstelle 16.

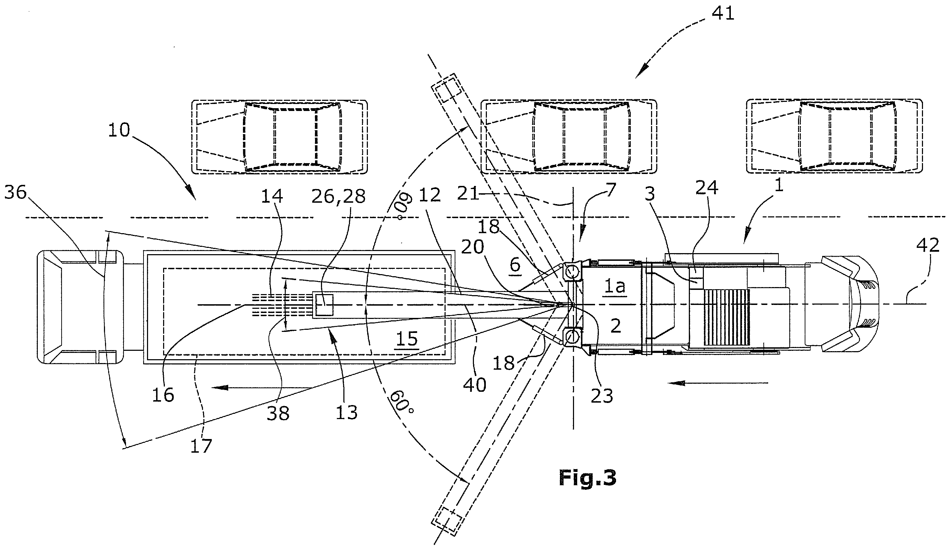

Fig. 3 zeigt ein Ausführungsbespiel bei Geradeausfahrt und fließendem Verkehr 41. Die Fräsmaschine 1 mit ihrer Längsmittelachse 42 belädt in etwa mittig die Ladefläche 15 des Transportfahrzeugs 10, wobei ein unsymmetrischer Schwenkwinkelbereich 36 für das Transportband 12 von einer Steuerung 3 oder einer Erfassungs- und Steuereinheit 24 festgelegt ist. Wie aus Fig. 3 ersichtlich ist der Schwenkwinkelbereich 36 in Relation zur Längsmittelachse 42 der Fräsmaschine 1, sowie in Relation zur Längsmittelachse 40 des Transportbandes 12 unsymmetrisch zu einer Mittellage von 0°, bei der die Längsmittelachse 40 des Transportbandes 12 mit der Längsmittelachse 42 der Fräsmaschine 1 fluchtet. Der maximal zulässige Winkelbereich in Richtung der parallel verlaufenden Fahrbahn 41 ist geringer als auf der der parallelen Fahrbahn 41 abgewandten Seite der Ladefläche 15. Dieser Schwenkwinkelbereich 36 kann dynamisch in Abhängigkeit der Betriebssituation von der Steuerung 3 bzw. der Erfassungs- und Steuereinheit 24 variiert werden, und zwar in Abhängigkeit z. B. von einem oder mehreren der nachfolgenden Parameter:
- Relative Lage der Längsmittelachsen 40, 42 zueinander,
- eingestellter Höhewinkel,
- Fördergeschwindigkeit,
- aktueller Lenkwinkel der Fräsmaschine,
- Seite der parallelen Fahrbahn 41,
- Lage der detektierten Ladefläche 15,
- Lage einer vorgegebenen Zone auf der Ladefläche 15,
- Stillstand des Transportfahrzeugs oder Bewegung des Transportfahrzeugs 10,
- Beladungszustand auf der Ladefläche 15,
- Abstand des Transportfahrzeugs von der Fräsmaschine.

Innerhalb des maximal zulässigen Schwenkwinkelbereichs 36 kann bezogen auf die Längsmittelachse 40 des Transportbandes 12 ein weiterer Schwenkwinkelbereich 38 definiert sein, der sich auf die aktuelle Lage der Längsmittelachse 40 bezieht.

Der mechanisch maximal mögliche Schwenkbereich des Transportbandes 12 beträgt ± 60° und ist in Fig. 3 durch die gestrichelt dargestellten Positionen des Transportbandes ersichtlich.

Auch dieser Schwenkwinkelbereich 38 kann symmetrisch oder alternativ unsymmetrisch zur aktuellen Lage der Längsmittelachse 40 insbesondere in Verbindung mit einer zeit- und/oder wegabhängigen Schaltungssteuerung festgelegt sein.

Die Zulassung mehrerer kurz aufeinanderfolgender Steuerbefehle kann derart beschränkt sein, dass jeder weitere Steuerbefehl nur nach Ablauf einer vorgegebenen Zeit oder Wegstrecke möglich ist.

Die von der Steuerung 3 oder der Erfassungs-und Steuereinheit 24 festgelegten Grenzwerte für die Schwenkwinkelbereiche 36 und 38 können manuell durch einen entsprechenden Steuerbefehl an die Steuerung 3 bzw. die Erfassungs-und Steuereinheit 24 überwunden werden, wobei alternativ auch festgelegt sein kann, dass die Grenzwerte des maximal zulässigen Schwenkwinkelbereichs 36 auch manuell nicht überschritten werden dürfen.

Im Notfall kann allerdings die automatische Schwenkwinkelsteuerung deaktiviert werden, so dass der Fahrzeugführer eigenverantwortlich die Schwenkbewegung des Transportbandes steuern kann.

Hinsichtlich des auf die Längsmittelachse 40 bezogenen Schwenkwinkelbereichs 38 kann auch vorgesehen werden, dass bei einer Veränderung der aktuellen Lage der Längsmittelachse 40 relativ zur Längsmittelachse 42 die neue Lage als Ausgangslage für den Schwenkwinkelbereich 38 festgelegt wird. Dies kann beispielsweise jeweils nach Ablauf einer vorbestimmten Zeitspanne oder Wegstrecke der Fall sein, oder auf einen entsprechenden Steuerbefehl des Fahrzeugführers hin erfolgen.

Bei erfolgter Überschreitung des Schwenkwinkelbereichs 36 oder 38 kann mit einem Resetsignal wieder zu den ursprünglich eingestellten Schwenkwinkelbereichen 36 bzw. 38 zurückgekehrt werden.

Im Falle einer freigegebenen Überschreitung kann der winkelmäßige Betrag begrenzt werden, nämlich beispielsweise auf einen Betrag von 1° bis 3°.

Es kann auch vorgesehen sein, dass der manuelle Steuerbefehl wiederholt eingebbar ist und im Falle der Wiederholung dies nur nach Ablauf einer vorgegebenen Zeitspanne oder nach einer zurückgelegten vorgegebenen Mindestwegstrecke wiederholbar ist.

Eine weitere Alternative besteht darin, dass bei Überschreitung der vorgegebenen Schwenkwinkelbereichs 38 eine niedrigere Verschwenkgeschwindigkeit für das Transportband 12 festgelegt wird.

Der aktuell eingestellte Höhenwinkel um eine horizontale erste Achse 21 bzw. Schwenkwinkel um eine vertikale zweite Achse 23 kann an eine Erfassungs- und Steuereinheit 24 gemeldet werden, die des Weiteren mindestens einen Detektor 26 aufweisen kann, der die Lage der Ladefläche 15 und/oder des in Transportrichtung letzten oder einzigen Transportbandes 12 fortlaufend detektiert. Dieser Detektor 26 kann entweder an der Fräsmaschine 1a, 1b an dem der Transportbandeinrichtung zugewandten Ende oder an dem freien Ende 13 des Transportbandes 12 angeordnet sein.

Die Erfassungs- und Steuereinheit 24 kann in die Steuerung 3 für den Fahr- und Fräsbetrieb integriert sein oder mit dieser zumindest verbunden sein, um ggf. auch Maschinendaten zu erhalten, wie z. B. über die Fahrgeschwindigkeit und/oder einen detektierten Lenkwinkel der Fräsmaschine 1a,1b und die Fördergeschwindigkeit des Transportbandes 12.

Die Steuerung 3 bzw. die Erfassungs- und Steuereinheit 24 kann bei einer besonderen Ausführungsform die veränderliche Lage der Ladefläche 15 des Transportfahrzeugs 10 relativ zum Maschinenrahmen 2 oder die veränderliche Lage der Ladefläche 15 des Transportfahrzeugs 10 relativ zum Transportband 12 detektieren und Grenzwerte für den aktuell maximalen Schwenkwinkelbereich 36, 38 in Abhängigkeit der Lage der detektierten Ladefläche 15, und/oder des eingestellten Höhenwinkels und/oder der Fördergeschwindigkeit und/oder eines aktuellen Lenkwinkels der Fräsmaschine 1 und/oder des Abstandes zwischen der Fräsmaschine 1 und dem Transportfahrzeug 10 automatisch festlegen.

Die Erfassungs- und Steuereinheit 24 kann auch die Aufgabe übernehmen, die Ladefläche 15 gleichmäßig zu befüllen. Hierzu kann ein Beladungsprogramm vorgesehen werden, um die Ladefläche 15 nach einem vorbestimmten System zu beladen. Dabei kann der Befüllungszustand auf der Ladefläche 15 von einem Bildaufnahmesystem erfasst und analysiert werden, um die Fördergeschwindigkeit und/oder die Lage des Abwurfendes 13 des Transportbandes 12 relativ zur Ladefläche 15 fortlaufend zu steuern.

In Abhängigkeit von Ladeflächen 15 unterschiedlicher Transportfahrzeuge 10 und/oder in Abhängigkeit unterschiedlicher Beladungszustände der Ladefläche 15 können für unterschiedliche Lagen und/oder Auftreffstellen 16 Steuerungsdaten in einem Kennfeld gespeichert sein. Ein solcher Kennfeld-Speicher kann in das Erfassungs- und Steuereinheit 24 oder in der Steuerung 3 integriert sein. Die Steuerungsdaten betreffen die Schwenkwinkelbereiche 36, 38, den Höhenwinkel und/oder die Fördergeschwindigkeit des Transportbandes 12 für unterschiedliche Lagen und/oder Auftreffstellen 16 innerhalb der von der Erfassungs- und Steuereinheit 24 erfassten Lage einer Ladefläche 15.

Die Erfassungs- und Steuereinheit 24 kann bei dem besonderen Ausführungsbeispiel die Lage der Ladefläche 15 und/oder des in Transportrichtung letzten oder einzigen Transportbandes 12 fortlaufend mit Hilfe eines Bildaufnahmesystems 28 oder eines nicht optischen elektronischen Ortungssystems erfassen, das Daten zur Lagebestimmung der Ladefläche 15 in Relation zu dem Maschinenrahmen 2 oder zu dem Transportband 12 liefert. Die Informationen des Bildaufnahmesystems 28 kann durch für sich bekannte Bildanalysemethoden ausgewertet werden.

Die Steuerung 3 bzw. die Erfassungs- und Steuereinheit 24 kann die Daten zur Lagebestimmung mit vorgegebenen Lagedaten vergleichen, um im Falle von Abweichungen von den vorgegebenen Soll-Lagedaten eine fortlaufende Lagesteuerung für die Position des Abwurfendes 13 und/oder der Auftreffstelle 16 des Fräsgutes 14 und/oder eine Geschwindigkeitssteuerung für die Fördergeschwindigkeit durchzuführen.

Die Soll-Lagedaten können durch ein Teach-in-Verfahren ermittelt werden, indem die Positionen der Fahrzeuge 1a, 1b, 10 entsprechend realistischen Betriebssituationen variiert werden und die jeweils hierfür notwendigen Parameter, nämlich maximal zulässiger Schwenkwinkelbereich 36 und 38, Höhenwinkel und Fördergeschwindigkeit des Transportbandes gespeichert werden. In gleicher Weise kann auch ein Beladungsprogramm erstellt werden. Dabei können auch Variationen der Steuerung, die z. B. durch Kurvenfahrt entstehen, berücksichtigt werden. Die durch den Lesevorgang eingelesenen Daten können dabei auch unterscheiden, ob das Transportfahrzeug 10 links oder rechts neben der Frässpur fährt oder in der Frässpur der Fräsmaschine 1a, 1b und auf welcher Seite sich eine parallele Fahrbahn 41 befindet.

## Patentansprüche

1. Selbstfahrende Fräsmaschine (1, 1a, 1b),
- mit einem Maschinenrahmen (2),
- mit einer Steuerung (3) für den Fahr- und Fräsbetrieb,
- mit einer Arbeitswalze (22),
- mit einem Transportband (12),
- wobei das Transportband (12) relativ zum Maschinenrahmen (2) um eine im wesentlichen horizontal verlaufende erste Achse (21) unter einem Höhenwinkel, und um eine orthogonal zur ersten Achse (20) verlaufende zweite Achse (23) seitlich unter einem Schwenkwinkel verschwenkbar ist,
- wobei das Transportband (12) das Fräsgut (14) auf eine Ladefläche (15) eines Transportfahrzeuges (10) mit einer vorgegebenen Fördergeschwindigkeit ablädt, und
- wobei die Steuerung (3) die Positionierung des Fräsgutes (14) auf der Ladefläche (15) zumindest über den Schwenkwinkel des Transportbandes (12) fortlaufend automatisch steuert,
**dadurch gekennzeichnet,dass**
die Steuerung (3) Grenzwerte für einen maximal zulässigen Schwenkwinkelbereich (36, 38) für das Verschwenken des Transportbandes (12) vorgibt und überwacht.

2. Fräsmaschine (1) nach Anspruch 1, **dadurch gekennzeichnet, dass** die Steuerung (3) die Grenzwerte für den zulässigen Schwenkwinkelbereich (36, 38) relativ zu dem Maschinenrahmen (2) und/oder relativ zu dem Transportband (12) vorgibt und vorzugsweise bei Kurvenfahrt die Grenzwerte in Abhängigkeit vom aktuellen Kurvenradius dynamisch vorgibt.

3. Fräsmaschine nach Anspruch 1 oder 2, **dadurch gekennzeichnet, dass** der zulässige Schwenkwinkelbereich (38) relativ zu dem Transportband (12) auf einen engeren Winkelbereich im Vergleich zu dem maximal zulässigen Schwenkwinkelbereich (36) relativ zu dem Maschinenrahmen (2) begrenzbar ist.

4. Fräsmaschine (1) nach einem der Ansprüche 1 bis 3, **dadurch gekennzeichnet, dass** die Steuerung (3) eine Erfassungs- und Steuereinheit (24) aufweist, die die Positionierung des Fräsgutes (14) auf der Ladefläche (15) zumindest über den Schwenkwinkel und/oder den Höhenwinkel und/oder die Fördergeschwindigkeit des Transportbandes (12) steuert, und die Grenzwerte für den aktuell maximal zulässigen Schwenkwinkelbereich (36, 38) in Abhängigkeit der relativen Lage des Maschinenrahmens (2) und des Transportbandes (12) zueinander und/oder des eingestellten Höhenwinkels und/oder der Fördergeschwindigkeit und/oder eines aktuellen Lenkwinkels der Fräsmaschine (1) und/oder des Abstandes zwischen der Fräsmaschine (1) und dem Transportfahrzeug (10) festlegt.

5. Fräsmaschine (1) nach einem der Ansprüche 1 bis 4, **dadurch gekennzeichnet, dass** die Steuerung (3) ein Informationssignal über den neben dem Transportfahrzeug (10) befindlichen Arbeitsraum erhält und den maximal zulässigen Schwenkwinkelbereich (36, 38) in Richtung auf wenigstens eine Seite des Transportfahrzeuges (10) verringert oder vollständig sperrt.

6. Fräsmaschine (1) nach einem der Ansprüche 1 bis 5, **dadurch gekennzeichnet, dass** auf einen manuellen Steuerbefehl für die Steuerung (3) hin der zulässige Schwenkwinkelbereich (36, 38) überschreitbar ist.

7. Fräsmaschine (1) nach Anspruch 6, **dadurch gekennzeichnet, dass** der manuelle Steuerbefehl wiederholt, vorzugsweise nach einem vorgegebenen Zeitablauf oder nach einer zurückgelegten Wegstrecke, ausführbar ist.

8. Fräsmaschine (1) nach Anspruch 6 oder 7, **dadurch gekennzeichnet, dass** die Überschreitung auf den manuellen Steuerbefehl hin betragsmäßig begrenzt ist.

9. Fräsmaschine (1) nach einem der Ansprüche 1 bis 8, **dadurch gekennzeichnet, dass** die Steuerung (3) die veränderliche Lage der Ladefläche (15) des Transportfahrzeugs (10) relativ zum Maschinenrahmen (2) oder die veränderliche Lage der Ladefläche (15) des Transportfahrzeugs (10) relativ zum Transportband (12) detektiert und Grenzwerte für den aktuell maximalen Schwenkwinkelbereich (36, 38) in Abhängigkeit der Lage der detektierten Ladefläche (15), und/oder des eingestellten Höhenwinkels und/oder der Fördergeschwindigkeit und/oder eines aktuellen Lenkwinkels der Fräsmaschine (1) und/oder dem Abstand zwischen der Fräsmaschine (1) und dem Transportfahrzeug (10) automatisch festlegt.

10. Fräsmaschine (1) nach einem der Ansprüche 1 bis 9, **dadurch gekennzeichnet, dass** die Steuerung (3) den zulässigen Schwenkwinkelbereich (36, 38) in Abhängigkeit von dem intermittierenden Betrieb des Transportfahrzeuges (10) und/oder dem Abstand zwischen der Fräsmaschine (1) und dem Transportfahrzeug (10) variiert.

11. Fräsmaschine (1) nach einem der Ansprüche 1 bis 10, **dadurch gekennzeichnet, dass** die Steuerung (3) die Ladefläche (15) detektiert und den maximal zulässigen Schwenkwinkelbereich (36, 38) in Abhängigkeit von einer vorgegebenen Zone (17) auf der Ladefläche (15) festlegt und/oder den Beladungszustand auf der Ladefläche (15) detektiert und den maximal zulässigen Schwenkwinkelbereich (36, 38) in Abhängigkeit von dem detektierten Beladungszustand variiert.

12. Verfahren zum Abladen von abgearbeitetem Fräsgut (14) einer selbstfahrenden Fräsmaschine (1) auf eine Auftreffstelle (16) auf einer Ladefläche (15) eines Transportfahrzeuges (10), bei dem
- die Fräsmaschine (1) für den Fahr- und Fräsbetrieb gesteuert wird,
- das von einer Arbeitswalze (22) abgearbeitete Fräsgut (14) mit einem Transportband (12) auf die Ladefläche (15) eines Transportfahrzeuges (10) mit einer vorgegebenen Fördergeschwindigkeit abgeworfen wird,
- wobei ein Transportband (12) relativ zu einer Längsmittelachse des Maschinenrahmens (2) der Fräsmaschine (1a, 1b) seitlich unter einem Schwenkwinkel verschwenkt und hinsichtlich der Abwurfhöhe unter einem Höhenwinkel verstellt werden kann, und
- wobei die Positionierung des Fräsgutes (14) auf der Ladefläche (15) zumindest über den Schwenkwinkel, des Transportbandes (12) fortlaufend automatisch gesteuert wird,
**dadurch gekennzeichnet,dass**
der maximal zulässige Schwenkwinkelbereich (36,38) für das Verschwenken des Transportbandes (12) vorgegeben und überwacht wird.

13. Verfahren nach Anspruch 12, **dadurch gekennzeichnet, dass** der zulässige Schwenkwinkelbereich (36, 38) relativ zu dem Maschinenrahmen (2) und/oder relativ zu der aktuellen Lage des Transportbandes (12) vorgegeben wird.

14. Verfahren nach Anspruch 12 oder 13, **dadurch gekennzeichnet, dass** bei Kurvenfahrt die relative Lage des Schwenkwinkelbereichs (36, 38) zu dem Maschinenrahmen (2) und/oder dem Transportband (12) in Abhängigkeit vom aktuellen Kurvenradius dynamisch angepasst wird.

15. Verfahren nach einem der Ansprüche 12 bis 14, **dadurch gekennzeichnet, dass** die veränderliche Lage der Ladefläche (15) eines aktuellen Transportfahrzeugs (10) relativ zum Maschinenrahmen (2) oder die veränderliche Lage der Ladefläche (15) des jeweiligen Transportfahrzeugs (10) relativ zum Transportband (12) fortlaufend detektiert wird und Grenzwerte für den maximalen Schwenkwinkelbereich (36, 38) des Transportbandes (12) in Abhängigkeit der veränderlichen Lage und/oder des eingestellten Höhenwinkels und/oder der Fördergeschwindigkeit und/oder eines aktuellen Lenkwinkels der Fräsmaschine (1) oder des Abstandes zwischen der Fräsmaschine (1) und dem Transportfahrzeug (10) festgelegt werden.

16. Straßen- oder Bodenbearbeitungseinheit bestehend aus einer selbstfahrenden Fräsmaschine (1) und mindestens einem von der Fräsmaschine (1) unabhängig verfahrbaren und relativ zu der Fräsmaschine (1) derart positionierbaren Transportfahrzeug (10), dass das von der Fräsmaschine (1) abgearbeitete Fräsgut (14) auf das Transportfahrzeug (10) abladbar ist,
**gekennzeichnet durch**
eine Fräsmaschine (1) mit den Merkmalen der Ansprüche 1 bis 11.

## Claims

1. Automotive milling machine (1, 1a, 1b),
- comprising a machine frame (2),
- comprising a controller (3) for the travelling and milling operation,
- comprising a working drum (22),
- comprising a transport conveyor (12),
- where the transport conveyor (12) is slewable, relative to the machine frame (2), about a first axis (21) extending essentially horizontally under an elevation angle, and sideways about a second axis (23) extending orthogonally to the first axis (20) under a slewing angle,
- where the transport conveyor (12) discharges the milled material (14) onto a loading surface (15) of a transport vehicle (10) at a specified conveying speed, and
- where the controller (3) continuously controls positioning of the milled material (14) on the loading surface (15) automatically via, as a minimum, the slewing angle of the transport conveyor (12),
**characterized in that**
the controller (3) specifies and monitors limit values for a maximum permissible slewing angle range (36, 38) for slewing the transport conveyor (12).

2. Milling machine (1) in accordance with claim 1, **characterized in that** the controller (3) specifies the limit values for the permissible slewing angle range (36, 38) relative to the machine frame (2) and/or relative to the transport conveyor (12) and, preferably when cornering, specifies the limit values dynamically in accordance with the current bend radius.

3. Milling machine in accordance with claim 1 or 2, **characterized in that** the permissible slewing angle range (38) relative to the transport conveyor (12) is limitable to a narrower angle range in comparison with the maximum permissible slewing angle range (36) relative to the machine frame (2).

4. Milling machine (1) in accordance with one of the claims 1 to 3, **characterized in that** the controller (3) comprises a detection and control unit (24) which controls positioning of the milled material (14) on the loading surface (15) via, as a minimum, the slewing angle and/or the elevation angle and/or the conveying speed of the transport conveyor (12), and which specifies limit values for the currently maximum permissible slewing angle range (36, 38) in accordance with the relative position of the machine frame (2) and the transport conveyor (12) to one another and/or the elevation angle adjusted and/or the conveying speed and/or a current steering angle of the milling machine (1) and/or the distance between the milling machine (1) and the transport vehicle (10).

5. Milling machine (1) in accordance with one of the claims 1 to 4, **characterized in that** the controller (3) receives an information signal about the working space next to the transport vehicle (10) and reduces or completely locks the maximum permissible slewing angle range (36, 38) in the direction of at least one side of the transport vehicle (10).

6. Milling machine (1) in accordance with one of the claims 1 to 5, **characterized in that** the permissible slewing angle range (36, 38) is exceedable at a manual control command for the controller (3).

7. Milling machine (1) in accordance with claim 6, **characterized in that** the manual control command is executable repeatedly, preferably after a predetermined lapse of time or after a distance travelled.

8. Milling machine (1) in accordance with claim 6 or 7, **characterized in that** the exceedance at the manual control command is limited in terms of its amount.

9. Milling machine (1) in accordance with one of the claims 1 to 8, **characterized in that** the controller (3) detects the alterable position of the loading surface (15) of the transport vehicle (10) relative to the machine frame (2) or the alterable position of the loading surface (15) of the transport vehicle (10) relative to the transport conveyor (12) and automatically specifies limit values for the currently maximum slewing angle range (36, 38) in accordance with the position of the detected loading surface (15) and/or the elevation angle adjusted and/or the conveying speed and/or a current steering angle of the milling machine (1) and/or the distance between the milling machine (1) and the transport vehicle (10).

10. Milling machine (1) in accordance with one of the claims 1 to 9, **characterized in that** the controller (3) varies the permissible slewing angle range (36, 38) in accordance with the intermittent operation of the transport vehicle (10) and/or the distance between the milling machine (1) and the transport vehicle (10).

11. Milling machine (1) in accordance with one of the claims 1 to 10, **characterized in that** the controller (3) detects the loading surface (15) and specifies the maximum permissible slewing angle range (36, 38) in accordance with a predetermined zone (17) on the loading surface (15) and/or detects the loading condition on the loading surface (15) and varies the maximum permissible slewing angle range (36, 38) in accordance with the loading condition detected.

12. Method for discharging worked-off milled material (14) of an automotive milling machine (1) onto a point of impingement (16) on a loading surface (15) of a transport vehicle (10), wherein
- the milling machine (1) is controlled for the travelling and milling operation,
- the milled material (14) worked off by a working drum (22) is discharged onto the loading surface (15) of a transport vehicle (10) at a specified conveying speed by means of a transport conveyor (12),
- where a transport conveyor (12) can be slewed sideways relative to a longitudinal centre line of the machine frame (2) of the milling machine (1a, 1b) under a slewing angle and, in terms of the discharge height, can be adjusted under an elevation angle, and
- where positioning of the milled material (14) on the loading surface (15) is continuously controlled automatically via, as a minimum, the slewing angle of the transport conveyor (12),
**characterized in that**
the maximum permissible slewing angle range (36, 38) for slewing the transport conveyor (12) is specified and monitored.

13. Method in accordance with claim 12, **characterized in that** the permissible slewing angle range (36, 38) is specified relative to the machine frame (2) and/or relative to the current position of the transport conveyor (12).

14. Method in accordance with claim 12 or 13, **characterized in that**, during cornering, the relative position of the slewing angle range (36, 38) to the machine frame (2) and/or the transport conveyor (12) is adjusted dynamically in accordance with the current bend radius.

15. Method in accordance with one of the claims 12 to 14, **characterized in that** the alterable position of the loading surface (15) of a current transport vehicle (10) relative to the machine frame (2) or the alterable position of the loading surface (15) of the respective transport vehicle (10) relative to the transport conveyor (12) is detected continuously, and limit values for the maximum slewing angle range (36, 38) of the transport conveyor (12) are specified in accordance with the alterable position and/or the elevation angle adjusted and/or the conveying speed and/or a current steering angle of the milling machine (1) or the distance between the milling machine (1) and the transport vehicle (10).

16. Road or ground working unit comprising an automotive milling machine (1) and no less than one transport vehicle (10) movable independently of the milling machine (1) and positionable relative to the milling machine (1) in such a fashion that the milled material (14) worked off by the milling machine (1) is dischargeable onto the transport vehicle (10),
**characterized by**
a milling machine (1) comprising the features of claims 1 to 11.

## Revendications

1. Fraiseuse automotrice (1, la, lb),
- avec un châssis de machine (2) ;
- avec une commande (3) pour le mode en déplacement et le mode en cours de fraisage ;
- avec un cylindre de travail (22) ;
- avec une bande de transport (12) ;
- où la bande de transport (12) est capable de pivoter, par rapport au châssis de la machine (2), dans un angle d'élévation autour d'un premier axe (21) qui s'étend essentiellement à l'horizontale, et est capable de pivoter latéralement dans un angle de pivotement autour d'un deuxième axe (23) qui s'étend de manière orthogonale par rapport au premier axe (20) ;
- où la bande de transport (12) décharge le matériau fraisé (14) sur une surface de chargement (15) d'un véhicule de transport (10) à une vitesse d'avance prédéfinie ; et
- où la commande (3) pilote, automatiquement et de manière continue, le positionnement du matériau fraisé (14) sur la surface de chargement (15), tout au moins dans la plage de l'angle de pivotement de la bande de transport (12),
**caractérisée en ce que**
la commande (3) prédétermine et surveille des valeurs de seuil pour une plage maximale admissible de l'angle de pivotement (36, 38) pour le basculement de la bande de transport (12).

2. Fraiseuse (1) selon la revendication 1, **caractérisée en ce que** la commande (3) prédétermine les valeurs de seuil pour la plage admissible de l'angle de pivotement (36, 38) par rapport au châssis de la machine (2) et/ou par rapport à la bande de transport (12) et prédétermine de manière dynamique, de préférence durant les déplacements dans les virages, les valeurs de seuil en fonction du rayon de courbure effectif du virage.

3. Fraiseuse selon la revendication 1 ou 2, **caractérisée en ce que** la plage admissible de l'angle de pivotement (38) peut être limitée, par rapport à la bande de transport (12), sur une plage angulaire plus étroite par comparaison avec la plage maximale admissible de l'angle de pivotement (36), par rapport au châssis de la machine (2).

4. Fraiseuse (1) selon l'une des revendications 1 à 3, **caractérisée en ce que** la commande (3) présente une unité de commande et de reconnaissance (24) qui pilote le positionnement du matériau fraisé (14) sur la surface de chargement (15), tout au moins dans la plage de l'angle de pivotement, et/ou de l'angle d'élévation et/ou de la vitesse d'avance de la bande de transport (12), et définit les valeurs de seuil pour la plage maximale admissible actuelle de l'angle de pivotement (36, 38) en fonction de la position relative du châssis de la machine (2) et de la bande de transport (12) l'une par rapport à l'autre et/ou de l'angle d'élévation réglé et/ou de la vitesse d'avance et/ou d'un angle de braquage effectif de la fraiseuse (1) et/ou de la distance entre la fraiseuse (1) et le véhicule de transport (10).

5. Fraiseuse (1) selon l'une des revendications 1 à 4, **caractérisée en ce que** la commande (3) reçoit un signal d'information à travers l'espace de travail se trouvant à côté du véhicule de transport (10) et réduit ou bloque complètement la plage maximale admissible de l'angle de pivotement (36, 38) en direction d'au moins un côté du véhicule de transport (10).

6. Fraiseuse (1) selon l'une des revendications 1 à 5, **caractérisée en ce que** la plage admissible de l'angle de pivotement (36, 38) peut être dépassée dans le cas d'une instruction de commande manuelle délivrée à la commande (3).

7. Fraiseuse (1) selon la revendication 6, **caractérisée en ce que** l'instruction de commande manuelle peut être exécutée de manière répétée, de préférence après un laps de temps prédéfini ou après le parcours d'un trajet.

8. Fraiseuse (1) selon la revendication 6 ou 7, **caractérisée en ce que** le dépassement est limité en valeur absolue dans le cas d'une instruction de commande manuelle.

9. Fraiseuse (1) selon l'une des revendications 1 à 8, **caractérisée en ce que** la commande (3) détecte la position variable de la surface de chargement (15) du véhicule de transport (10) par rapport au châssis de la machine (2) ou détecte la position variable de la surface de chargement (15) du véhicule de transport (10) par rapport à la bande de transport (12) et définit automatiquement des valeurs de seuil pour la plage maximale actuelle de l'angle de pivotement (36, 38) en fonction de la position de la surface de chargement (15) détectée, et/ou de l'angle d'élévation réglé et/ou de la vitesse d'avance et/ou d'un angle effectif de braquage de la fraiseuse (1) et/ou de la distance entre la fraiseuse (1) et le véhicule de transport (10).

10. Fraiseuse (1) selon l'une des revendications 1 à 9, **caractérisée en ce que** la commande (3) fait varier la plage admissible de l'angle de pivotement (36, 38) en fonction du fonctionnement intermittent du véhicule de transport (10) et/ou de la distance entre la fraiseuse (1) et le véhicule de transport (10).

11. Fraiseuse (1) selon l'une des revendications 1 à 10, **caractérisée en ce que** la commande (3) détecte la surface de chargement (15) et définit la plage maximale admissible de l'angle de pivotement (36, 38) en fonction d'une zone (17) prédéfinie sur la surface de chargement (15) et/ou détecte l'état de chargement sur la surface de chargement (15) et fait varier la plage maximale admissible de l'angle de pivotement (36, 38) en fonction de l'état de chargement détecté.

12. Procédé destiné au déchargement de matériau fraisé (14) traité d'une fraiseuse (1) automotrice sur une position de contact (16) sur une surface de chargement (15) d'un véhicule de transport (10), pour lequel :
- la fraiseuse (1) est commandée pour le mode en déplacement et pour le mode en cours de fraisage ;
- le matériau fraisé (14) traité au moyen d'un cylindre de travail (22) est déversé sur une bande de transport (12) sur la surface de chargement (15) d'un véhicule de transport (10) avec une vitesse d'avance prédéfinie ;
- où une bande de transport (12) peut être basculée latéralement dans un angle de pivotement par rapport à un axe central longitudinal du châssis de machine (2) de la fraiseuse (la, lb) et la hauteur de déversement de la bande de transport (12) peut être réglée dans un angle d'élévation ; et
- où le positionnement du matériau fraisé (14) sur la surface de chargement (15), tout au moins dans la plage de l'angle de pivotement, de la bande de transport (12) est commandé automatiquement et de manière continue,
**caractérisé en ce que**
la plage maximale admissible de l'angle de pivotement (36, 38) est prédéterminée et surveillée pour le basculement de la bande de transport (12).

13. Procédé selon la revendication 12, **caractérisé en ce que** la plage admissible de l'angle de pivotement (36, 38) est prédéterminée par rapport au châssis de la machine (2) et/ou par rapport à la position actuelle de la bande de transport (12).

14. Procédé selon la revendication 12 ou 13, **caractérisé en ce que**, pour les déplacements dans les virages, la position relative de la plage de l'angle de pivotement (36, 38) par rapport au châssis de la machine (2) et/ou à la bande de transport (12) est adaptée de manière dynamique en fonction du rayon de courbure actuel du virage.

15. Procédé selon l'une des revendications 12 à 14, **caractérisé en ce que** la position variable de la surface de chargement (15) d'un véhicule de transport (10) actuel est détectée de manière continue par rapport au châssis de la machine (2) ou la position variable de la surface de chargement (15) du véhicule de transport (10) respectif est détectée de manière continue par rapport à la bande de transport (12), et des valeurs de seuil sont déterminées pour la plage maximale de l'angle de pivotement (36, 38) de la bande de transport (12) en fonction de la position modifiable et/ou de l'angle d'élévation réglé et/ou de la vitesse d'avance et/ou d'un angle de braquage actuel de la fraiseuse (1) ou de la distance entre la fraiseuse (1) et le véhicule de transport (10).

16. Unité de travail des voiries ou unité de travail du sol constituée d'une fraiseuse (1) automotrice et d'au moins un véhicule de transport (10) pouvant être positionné par rapport à la fraiseuse (1) et pouvant être déplacé indépendamment de la fraiseuse (1), de telle sorte que le matériau fraisé (14) traité par la fraiseuse (1) peut être déchargé sur le véhicule de transport (10),
**caractérisée par**
une fraiseuse (1) dotée des caractéristiques des revendications 1 à 11.
